# EUROPÄISCHE PATENTSCHRIFT

(11) **EP 1 364 242 B1**
(45) Veröffentlichungstag und Bekanntmachung des Hinweises auf die Patenterteilung: **15.09.2004**
(21) Anmeldenummer: 02702313.4
(22) Anmeldetag: 25.01.2002
(51) Int. Cl.: G02B 6/42, G01M 11/00

(54) **ANORDNUNG UND VERFAHREN ZUM DETEKTIEREN EINES OPTISCHEN SIGNALS AN DER LÄNGSSEITE EINER GLASFASER**
ARRANGEMENT AND METHOD FOR DETECTING AN OPTICAL SIGNAL ON THE LONG SIDE OF AN OPTIC FIBRE
SYSTEME ET PROCEDE POUR DETECTER UN SIGNAL OPTIQUE SUR LE COTE LONG D'UNE FIBRE OPTIQUE

(30) Priorität: 21.02.2001 DE 10108303
(43) Veröffentlichungstag der Anmeldung: 26.11.2003
(73) Patentinhaber: Deutsche Telekom AG, 53113 Bonn (DE)
(72) Erfinder: HILDEBRANDT, Eric, 60487 Frankfurt am Main (DE)
(86) Internationale Anmeldenummer: PCT/EP2002/000779
(87) Internationale Veröffentlichungsnummer: WO 2002/067029

(56) Entgegenhaltungen:
- US-A- 3 982 123
- US-A- 4 983 007
- US-A- 5 235 657
- US-A- 5 347 602

## Beschreibung

Die Erfindung betrifft eine Anordnung sowie ein Verfahren zum Detektieren eines optischen Signals, das an der Längsseite einer Glasfaser austritt.

In der optischen Übertragungstechnik spielt die Glasfaser als Übertragungsmedium eine besondere Rolle. Aufgrund der rasch wachsenden Einsatzgebiete für optische Fasern wird es immer wichtiger, Techniken bereitzustellen, mit denen Glasfasern überwacht werden können.

Aus der US-A-5 347 602 ist eine Anordnung gemäß dem Oberbegriff des Abspruchs 1 zum Biegen eines Lichtwellenleiters, um optische Signale in dem Lichtwellenleiter detektieren zu können, bekannt.

Der Erfindung liegt nunmehr die Aufgabe zugrunde, eine Anordnung sowie ein Verfahren zum Detektieren eines optischen Signals an der Längsseite einer Glasfaser bereitzustellen.

Die grundlegende Idee der Erfindung besteht darin, den bekannten Effekt, dass bei einer gebogenen Glasfaser ein geringer Anteil des Lichtes aus der Faser austritt, effizient nutzen zu können. Hierzu wird eine Anordnung bereitgestellt, mit der ein hoher Anteil des aus der Faser austretenden Lichtes eingefangen und in ein elektrisches Signal umgewandelt werden kann. Diese Anordnung eignet sich nicht nur für die Überwachung einer Glasfaser, sondern beispielsweise auch als Empfangsteil einer Set-Top-Box zum Empfangen eines über die Glasfaser übertragenen digitalen Fernsehprogramms.

Das technische Problem löst die Erfindung zum einen mit den Merkmalen des Anspruchs 1.

Danach ist eine Anordnung zum Detektieren eines optischen Signals an der Längsseite einer Glasfaser vorgesehen. Die Anordnung umfasst eine Einrichtung zum Biegen der Glasfaser. Eine erste Halteeinrichtung sorgt dafür, dass die Glasfaser im gebogenen Zustand gehalten werden kann. Eine zweite Halteeinrichtung trägt wenigstens einen Fotodetektor. Die Biegeeinrichtung und die zweite Halteeinrichtung sind relativ zueinander derart bewegbar, dass im Betriebszustand der Fotodetektor an einem vorbestimmbaren Abschnitt der gebogenen Glasfaser anliegt. Ferner ist eine Antriebseinrichtung zum Heranfahren und Anlegen des Fotodetektors an einen vorbestimmbaren Abschnitt der gebogenen Glasfaser vorgesehen.

Eine Weiterbildung betrifft einen Regelmechanismus, mit dem der Fotodetektor an den Abschnitt der gebogenen Glasfaser anlegbar ist, an dem der größte Lichtanteil austritt.

Vorzugsweise wird als Fotodetektor eine Halbleiter-Fotodiode verwendet, die an einer Oberfläche des Detektors einen lichtempfindlichen Bereich aufweist. Damit möglichst viel Licht auf den lichtempfindlichen Bereich fällt, ist im Betriebszustand der lichtempfindliche Bereich des Fotodetektors wenigstens teilweise unmittelbar an den vorbestimmbaren Abschnitt der gebogenen Glasfaser angelegt. Vorteilhafterweise liegt der lichtempfindliche Bereich tangential an dem Faserabschnitt an.

Um den lichtempfindlichen Bereich des Fotodetektors vor Beschädigungen zu schützen, kann auf der Detektoroberfläche eine lichtdurchlässige Schutzschicht wenigstens teilweise über dem lichtempfindlichen Bereich aufgebracht sein.

Bei bestimmten Fotodioden führt von dem lichtempfindlichen Bereich ein dünner Bond-Draht, zumeist in Form eines Golddrahtes, zu einem Verbindungspin, der mit äußeren Anschlüssen der Fotodiode verbunden ist. In diesem Fall ist es zweckmäßig, beim Aufbringen der lichtdurchlässigen Schutzschicht auf die Detektoroberfläche auch den Bond-Draht selbst mit einzuschließen, um ein Abreisen zu verhindern. Als lichtdurchlässige Schutzschicht kann beispielsweise ein UV-härtbarer Optik-Kleber verwendet werden.

An dieser Stelle sei bereits daraufhin gewiesen, dass in Folge der kleinen Abmessungen der Fotodiode die Schutzschicht eher die Form eines Tropfens annimmt. Ist eine lichtdurchlässige Schicht auf der Oberfläche des Detektors aufgebracht, liegt diese im Betriebszustand direkt an dem vorbestimmbaren Abschnitt der gebogenen Glasfaser an.

Alternativ oder ergänzend zur lichtdurchlässigen Schutzschicht kann eine optische Linse, beispielsweise eine GRIN-Linse auf der Detektoroberfläche aufgebracht sein, die zusätzliches aus dem Faserabschnitt austretendes Licht auf den lichtempfindlichen Bereich des Fotodetektors fokusiert.

Alternativ oder ergänzend zu der lichtdurchlässigen Schicht und/oder der optischen Linse kann eine weitere optische Schicht oder auch ein System aus mehreren Schichten aufgebracht sein, die als Filter wirken, und Licht einer vorbestimmten Wellenlänge oder eines vorbestimmten Wellenlängenbereichs durchläßt. Verfahren zum Aufbringen und Herstellen solcher optischer Schichten sind allgemein bekannt und nicht Gegenstand dieser Erfindung.

Jede dieser Schichten kann in ihren Abmessungen, vorzugsweise in Längsrichtung der Glasfaser, größer sein als der lichtempfindliche Bereich des Fotodetektors. Ferner kann zumindest die äußere optische Schicht eine vorzugsweise gekrümmte Rille aufweisen, in die der gebogene Abschnitt der Glasfaser einlegbar ist.

Die optischen Schichten können zusätzlich zumindest teilweise verspiegelt sein, um die Intensität des auf den lichtempfindlichen Bereich des Fotodetektors fallenden Lichtes zu erhöhen.

Bei der Biegeeinrichtung kann es sich im einfachsten Fall um einen austauschbaren Stab mit rundem Querschnitt und einem vorbestimmten Durchmesser handeln.

Um zu vermeiden, dass die Glasfaser an dem Stab beschädigt wird, weist dieser eine Schutzschicht auf. Ferner kann in dem Stab beziehungsweise in der Schutzschicht des Stabes eine Führungsrille zur Führung der zu biegenden Glasfaser ausgenommen sein. Auf diese Weise kann verhindert werden, dass die zu biegende Glasfaser in Längsrichtung des Stabes verrutscht.

Der Grad der Biegung der Glasfaser hängt zum einen vom Radius des Biegestabes sowie von der relativen Stellung der ersten Halteeinrichtung zum Biegestab ab. In der Beschreibung wird der Radius des Biegestabes als Biegeradius und der von der gebogenen Glasfaser eingeschlossene Winkel als Umschlingungswinkel bezeichnet. Beispielsweise beträgt der Biegeradius zwei Millimeter und der Umschlingungswinkel etwa 130°C. Ein Umschlingungswinkel von 180°C würde einer gerade verlaufenden Glasfaser entsprechen.

Die erste Halteeinrichtung kann zwei im Abstand zueinander angeordnete Halteelemente aufweisen, die relativ zueinander und zur Biegeeinrichtung bewegbar sind.

Jedes Halteelement weist vorzugsweise ein Backenpaar zum Halten eines entsprechenden Glasfaserabschnittes auf. Die Backen jedes Backenpaares sind derart angeordnet, dass sie in Richtung der Längsachse des Biegestabes oder in der von der gebogenen Glasfaser gebildeten Ebene aufeinander zu und voneinander weg bewegbar sind.

Um ein seitliches Verrutschen die jeweiligen Glasfaserabschnitte zu vermeiden, weisen die Backen jedes Backenpaares eine Rille zur Aufnahme des entsprechenden Glasfaserabschnittes auf. Die Backen können mit einer Abpolsterung, beispielsweise aus Gummi versehen sein, die verhindert, dass sich Druckstellen auf der Glasfaser bilden, die die Faser beschädigen können.

Um mit der erfindungsgemäßen Anordnung optische Signale in beiden Richtungen der Glasfaser detektieren zu können, sind zwei Fotodetektoren vorgesehen, die an den entsprechenden gebogenen Abschnitten der Glasfaser angeordnet sind und das am jeweiligen Faserabschnitt austretende Licht detektieren.

Die beiden Fotodetektoren sind starr über die zweite Halteeinrichtung miteinander verbunden. Alternativ kann die zweite Halteeinrichtung derart ausgebildet sein, dass die Fotodetektoren unabhängig voneinander bewegbar sind.

Der Fotodetektor ist mit einem HF-Verstärker verbunden, der die vom Fotodetektor aus den optischen Signalen erzeugten elektrischen Signale zur entsprechenden Weiterverarbeitung verstärkt.

Um einen kompakten und möglichst kleinen Aufbau zu erreichen, sind Fotodetektor und HF-Verstärker integriert herstellbar. Auf diese Weise läßt sich die Zuleitung zwischen dem Fotodetektor und dem HF-Verstärker und damit die Leitungsdämpfung deutlich minimieren.

Um die Glasfaser und den Fotodetektor optimal zueinander ausrichten zu können, ist der Biegeeinrichtung und/oder der zweiten Halteeinrichtung eine Antriebseinrichtung zum Anlegen des Fotodetektors an einen vorbestimmbaren Abschnitt der gebogenen Glasfaser zugeordnet, die manuell oder automatisch betrieben wird.

Um zu vermeiden, dass beim Andrücken des Fotodetektors an die Glasfaser die Glasfaser selbst oder der Fotodetektor beschädigt wird, ist der Antriebseinrichtung ein Andrucksregler zugeordnet, der dafür sorgt, dass der Fotodetektors an den vorbestimmten Abschnitt der Glasfaser mit einem einstellbaren Druck angelegt wird.

Die gesamte Anordnung kann auf einer Montageplatte als Handgerät implementiert sein, welches an eine Glasfaser anklemmbar ist.

Ferner ist es denkbar, die Anordnung als automatisiertes, Tischgerät oder mobiles Gerät auszubilden.

Als Fotodiode kann beispielsweise eine PIN- oder APD-Diode verwendet werden.

Das oben genannte technische Problem wird ebenfalls durch die Verfahrensschritte des Anspruchs 16 gelöst.

Danach ist ein Verfahren beansprucht, nach dem eine Glasfaser an einer vorbestimmten Stelle unter einem einstellbaren Winkel zunächst gebogen wird. Die Glasfaser wird dann im gebogenen Zustand gehalten. Zum Detektieren des aus dem gebogenen Abschnitt austretenden Lichtes wird wenigstens ein Fotodetektor an einen vorbestimmbaren Abschnitt der gebogenen Glasfaser angelegt.

Der Faserabschnitt, an den der Fotodetektor angelegt werden soll, entspricht zweckmäßigerweise dem Abschnitt, aus dem das meiste Licht austritt.

Eine vorteilhafte Weiterbildung ist Gegenstand des abhängigen Anspruchs.

Die Erfindung wird nachstehend anhand eines Ausführungsbeispiels in Verbindung mit den beiliegenden Zeichnungen näher erläutert. Es zeigen:
- Figur 1: in vereinfachter Darstellungsform eine Draufsicht auf die erfindungsgemäße Anordnung,
- Figur 2: die Draufsicht auf eine in der Anordnung nach Figur 1 verwendeten PIN-Diode, und
- Figur 3: eine Seitenansicht, der in Figur 2 gezeigten PIN-Diode.

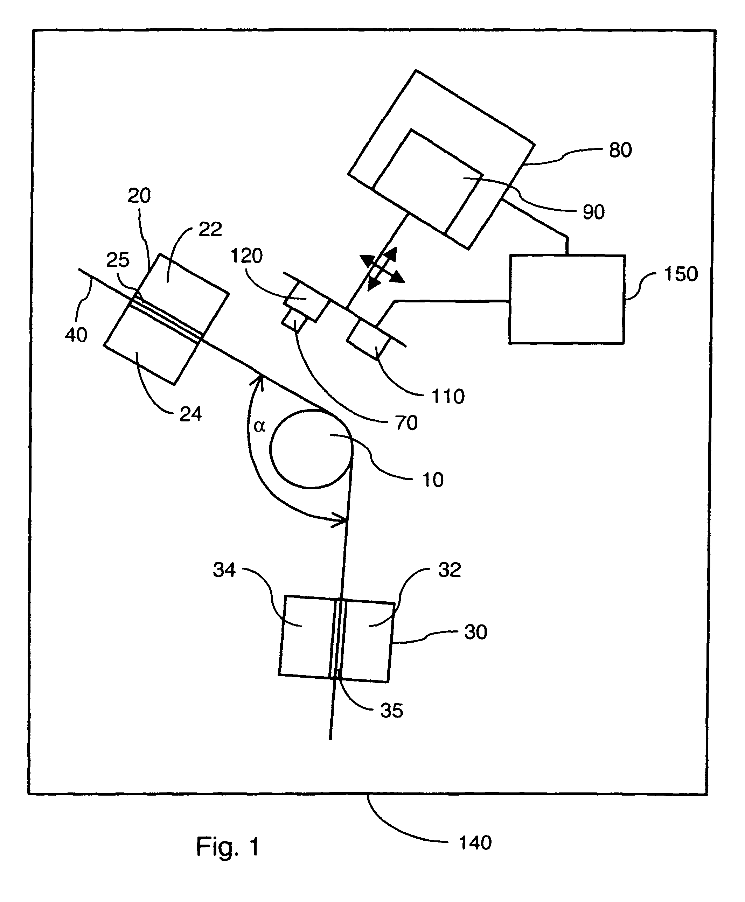

Figur 1 zeigt die schematische Darstellung einer auf einer Montageplatte 140 montierten Anordnung, die einen Biegestab 10 mit einem kreisförmigen Querschnitt aufweist. An dieser Stelle sei darauf hingewiesen, dass einer besseren Darstellbarkeit wegen weder die Anordnung selbst noch die einzelnen Komponenten maßstabsgerecht und im richtigen Verhältnis zueinander gezeigt sind. Gemäß dem Ausführungsbeispiel sind zwei Halterungseinrichtungen 20 und 30 dem Biegestab 10 zugeordnet, die jeweils zwei Backen 22, 24 bzw. 32, 34 aufweisen. Die Backen jeder Haltereinrichtung bewegen sich in der Ebene aufeinander zu und weg, die durch eine um den Biegestab 10 gebogene Glasfaser 40 gebildet wird. Alternativ kann jede Halterungseinrichtung 20 und 30 zwei vertikal übereinander liegende Halterungsbacken zur Aufnahme eines vorbestimmten Abschnittes der Glasfaser 40 enthalten. Die der Glasfaser 40 zugewandte Oberfläche jeder Halterungsbacke 22, 24, 32 und 34 kann eine Gummischicht aufweisen, um eine Beschädigung der Glasfaser 40 zu vermeiden. Um ein seitliches Entweichen der gehaltenen Glasfaser 40 zu vermeiden, sind in den Halterungsbacken Führungsrillen 25 bzw. 35 eingebracht. Die Halterungseinrichtungen 20 und 30 wirken mit dem Biegestab 10 zusammen, um die Glasfaser unter einem bestimmten Winkel zu biegen und im gebogenen Zustand zu halten. Hierzu lassen sich die Halterungseinrichtungen 20 und 30 relativ zueinander und zum Biegestab 10 bewegen. Zum einen können die Halterungseinrichtungen 20 und 30 entlang der Längsachse der Glasfaser 40 bewegt werden, um den dazwischenliegenden Faserabschnitt unter einer vorbestimmten Zugspannung zu halten. Ferner können die Halterungseinrichtungen 20 und 30 auf einer gedachten Linie, die durch den Biegestab 10 verläuft, zu oder von dieser weg bewegt werden, um den Umschlingungswinkel α, der von der gebogenen Glasfaser 40 eingeschlossen wird, zu verändern.

Der Biegestab 10 kann eine Schutzschicht aufweisen, die verhindert, dass die anliegende Glasfaser 40 beschädigt wird. Um ein vertikales Verrutschen der Glasfaser 40 an dem Biegestab 10 zu vermeiden, ist eine Führungsrille in dem Biegestab 10 ausgenommen.

Im Abstand zum Biegestab 10 ist eine Halteeinrichtung 60 angeordnet, an der im vorliegenden Beispiel ein Fotodetektor, beispielsweise eine PIN-Diode 70, zusammen mit einem HF-Verstärker 110 befestigt ist. Fotodetektor 70 und HF-Verstärker 110 sind elektrisch miteinander verbunden. Um die Zuleitung zwischen dem Fotodetektor 70 und dem HF-Verstärker 110 zu minimieren, ist es denkbar, den Fotodetektor 70 und den HF-Verstärker 110 als integrierte Einheit herzustellen.Der Fotodetektor 70 sitzt auf einem kleinen Podest 120, und überragt somit den HF-Verstärker 110 in der Höhe. Auf diese Weise kann der Fotodetektor 70, wie weiter unten noch erläutert wird, direkt an die Glasfaser 40 angelegt werden, ohne dass die Baugröße des HF-Verstärkers stört. Die Halteeinrichtung 60 ist mit einer Antriebseinrichtung 80 verbunden, die den Fotodetektor 70 an einen vorbestimmten Abschnitt der gebogenen Glasfaser 40 anfahren kann. Die PIN-Diode 70 ist derart an der Halteeinrichtung 60 befestigt, dass der lichtempfindliche Bereich 75 der Glasfaser 40 zugeordnet ist. Die Antriebseinrichtung 80 kann manuell betätigbar oder beispielsweise ein elektromechanischer Antrieb sein.

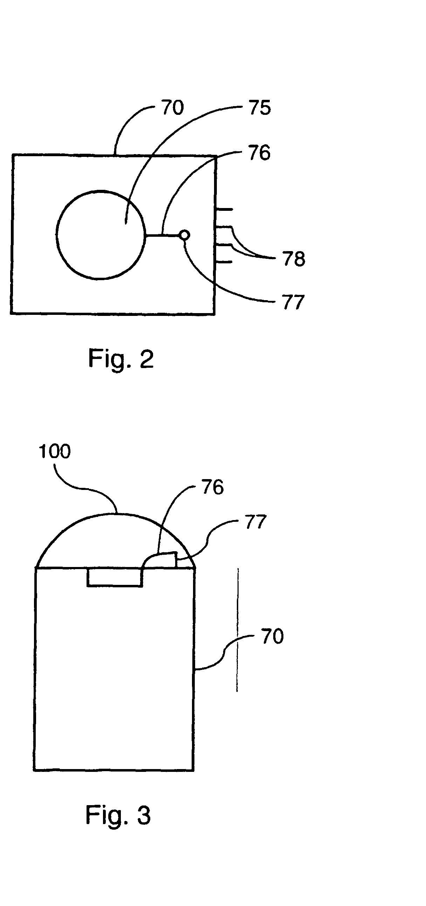

Figur 2 zeigt eine Draufsicht auf die PIN-Diode 70, die an der der Glasfaser 40 zugewandten Oberfläche einen lichtempfindlichen Bereich 75 enthält. Von dem lichtempfindlichen Bereich 75 erstreckt sich ein Bond-Draht zu einem elektrischen Verbindungsstift 77, der mit äußeren Kontaktelementen 78 der PIN-Fotodiode 70 verbunden ist.

Figur 3 zeigt eine Seitenansicht der PIN-Diode 70. Auf der der Glasfaser 40 zugewandten Oberfläche ist beispielsweise eine lichtdurchlässige Schutzschicht 100 in Form eines Tropfens aufgebracht, die im vorliegenden Beispiel die gesamte Oberfläche und somit auch den lichtempfindlichen Bereich 75 und den Bonddraht 77 abdeckt. Die Schutzschicht 100 verhindert, dass beim Andrücken der Detektoroberfläche an die gebogene Glasfaser 40 der Bond-Draht 76 beschädigt oder abgerissen wird. In die Schutzschicht 100 kann eine Rille 105 eingebracht sein, an die ein vorbestimmter gebogenen Abschnitt der Glasfaser 40 angedrückt werden kann. Weiterhin ist es denkbar, dass alternativ oder zusätzlich zur Schutzschicht 100 eine weitere optische Schicht aufgebracht ist, die als Linse wirkt. Die Linse kann eine gekrümmte Rille aufweisen, in die sich ein entsprechender Abschnitt der Glasfaser 40 einlegt, sobald der Fotodetektor 70 an die Glasfaser 40 angedrückt wird. Die Linse kann zumindest teilweise verspiegelt sein, um aus dem gebogenen Faserabschnitt die austretenden Lichtstrahlen auf den lichtempfindliche Bereich 75 des Fotodetektors 70 zu lenken, die ohne Linse verloren gehen würde.

Der Antriebseinrichtung 80 ist ein Andruckregler 90 zugeordnet, der verhindert, dass der Fotodetektor unter einem zu großen Druck an die Glasfaser 40 angedrückt wird.

Im Betrieb wird nunmehr die PIN-Diode 70 mittels der Antriebseinrichtung 80 an einen vorbestimmten Abschnitt der gebogenen Glasfaser 40 herangefahren und an den Abschnitt mit einem einstellbaren Druck tangential angedrückt, so dass der lichtempfindliche Bereich 75 unmittelbar an der Glasfaser 40 anliegt. Ist , wie in Fig. 3 gezeigt, die Oberfläche des Fotodetektors 70 mit einer Schutzschicht 100 bedeckt, wird die Schutzschicht 100 unmittelbar an den Faserabschnitt angedrückt. Auf diese Weise wird sichergestellt, dass die Wegstrecke zwischen der Stelle, an der Licht aus der gebogenen Glasfaser 40 austritt, und dem lichtempfindlichen Bereich des Fotodetektors 70 minimal ist.

vorzugsweise wird die PIN-Diode 70 an den Faserabschnitt angelegt, aus dem die höchste Lichtintensität in Folge der Faserbiegung austritt. Denkbar ist auch, einen Regelmechanismus (150) vorzusehen, der in Abhängigkeit der vom Fotodetektor 70 detektierten Lichtleistung die Antriebseinrichtung 80 derart steuert, dass der Fotodetektor 70 automatisch an den Glasfaserabschnitt angelegt wird, an dem die höchste Lichtleistung austritt.

Anstatt den lichtdurchlässigen Bereich der Fotodiode 70, unmittelbar an die Glasfaser 40 anzulegen, ist es denkbar, die Substrat-Rückseite eines Fotodetektors an die Glasfaser anzulegen. In diesem Fall muss ein Halbleiter-Fotodetektor mit einem Substrat verwendet werden, das viel dünner ist als bei einer herkömmlichen Fotodiode und dessen Rückseite poliert ist. Zusätzlich muß die Absorption im Halbleitermaterial gegenüber herkömmlichen Fotodetektoren reduziert werden. Nur dann ist gewährleistet, dass das aus der gebogenen Glasfaser 40 austretende Licht überhaupt detektiert werden kann.

Wie bereits erwähnt, ist es ferner denkbar zwei räumlich getrennte Fotodetektoren an zwei vorbestimmten Abschnitten der gebogenen Glasfaser 40 anzubringen, um optische Signale, welche sich in beiden Richtung über die Glasfaser 40 ausbreiten, detektieren zu können. Diese Abschnitte befinden zwischen dem Berührungspunkt der Glasfaser 40 mit dem Biegestab 10 und der Halteeinrichtung 20 bzw. 30.

## Patentansprüche

1. Anordnung zum Detektieren eines optischen Signals an der Längsseite einer Glasfaser (40), mit
einer Einrichtung (10) zum Biegen der Glasfaser (40), eine erste Halteeinrichtung (20, 30) zum Halten der Glasfaser (40) im gebogenen Zustand,
eine zweite Halteeinrichtung (60) zum Halten wenigstens eines Fotodetektors (70),
wobei die Biegeeinrichtung (10) und die zweite Halteeinrichtung (60) relativ zueinander derart bewegbar sind, dass im Betriebszustand der Fotodetektor (70) an einem vorbestimmbaren Abschnitt der gebogenen Glasfaser (40) anliegt,
**gekennzeichnet durch**
eine Antriebseinrichtung (80) zum Heranfahren und Anlegen des Fotodetektors (70) an einen vorbestimmbaren Abschnitt der gebogenen Glasfaser (40).

2. Anordnung nach Anspruch 1,
dadurch gekennzeichent, dass
dass im Betriebszustand der Fotodetektor (70) unmittelbar an einem vorbestimmbaren Abschnitt der gebogenen Glasfaser (40) anliegt.

3. Anordnung nach Anspruch 2,
**dadurch gekennzeichnet, dass**
im Betriebszustand die lichtempfindliche Oberfläche (75) des Fotodetektors (70) wenigstens teilweise an dem vorbestimmbaren Abschnitt der gebogenen Glasfaser (40) im wesentlichen tangential anliegt.

4. Anordnung nach Anspruch 1,
**dadurch gekennzeichnet, dass**
auf der lichtempfindlichen Oberfläche (75) des Fotodetektors eine lichtdurchlässige Schutzschicht (100), eine optische Linse, insbesondere eine GRIN-Linse und/oder ein optisches Filter aufgebracht sind.

5. Anordnung nach Anspruch 4,
**dadurch gekennzeichnet, dass**
die lichtdurchlässige Schutzschicht (100), die optische Linse und/oder das optische Filter mit einer gekrümmten Führungsrille (105) zur Führung eines gebogenen Glasfaserabschnitts versehen sind.

6. Anordnung nach einem der Ansprüche 1 bis 5,
**dadurch gekennzeichnet, dass**
die Biegeeinrichtung (10) ein austauschbarer Stab mit rundem Querschnitt und einem vorbestimmten Durchmesser ist.

7. Anordnung nach Anspruch 6,
**dadurch gekennzeichnet, dass**
eine Schutzschicht den Stab (10) umgibt.

8. Anordnung nach Anspruch 6 oder 7,
**dadurch gekennzeichnet, dass**
eine Führungsrille im Stab (10) zu Führung der zu biegenden Glasfaser (40) vorgesehen ist.

9. Anordnung nach einem der Ansprüche 1 bis 8,
**dadurch gekennzeichnet, dass**
die erste Halteeinrichtung (20, 30) zwei im Abstand zueinander angeordnete Halteelemente aufweist.

10. Anordnung nach Anspruch 9,
**dadurch gekennzeichnet, dass**
die Halteelemente (20, 30) mit Bezug auf die Biegeeinrichtung und/oder relativ zueinander bewegbar sind.

11. Anordnung nach Anspruch 9 oder 10,
**dadurch gekennzeichnet, dass**
jedes Halteelement (20, 30) ein Backenpaar (22, 24; 32, 34) zum Halten eines Glasfaserabschnittes aufweist.

12. Anordnung nach einem der Ansprüche 1 bis 11,
**gekennzeichnet durch**
zwei Fotodetektoren, die relativ zueinander bewegbar sind.

13. Anordnung nach einem der Ansprüche 1 bis 12,
**dadurch gekennzeichnet, dass**
der Fotodetektor (70) mit einem HF-Verstärker (110) verbunden ist, und dass
der Fotodetektor (70) und der HF-Verstärker (110) integriert herstellbar sind.

14. Anordnung nach einem der Ansprüche 1 bis 13,
**dadurch gekennzeichnet, dass**
der Fotodetektor (70) eine Fotodiode ist.

15. Anordnung nach einem der Ansprüche 1 bis 14,
**dadurch gekennzeichnet, dass**
der Antriebseinrichtung (80) ein Andruckregler (90) zum Anlegen des Fotodetektors (70) an den vorbestimmten Abschnitt der Glasfaser (40) mit einem einstellbaren Druck zugeordnet ist.

16. Anordnung nach Anspruch 15,
**gekennzeichnet durch**
eine Regeleinrichtung (150), die in Abhängigkeit der vom Fotodetektor (70) detektierten Lichtleistung die Antriebseinrichtung (80) derart ansteuert, dass der Fotodetektor (70) automatisch an den Glasfaserabschnitt angelegbar ist, an dem die höchste Lichtleistung austritt.

17. Verfahren zum Detektieren eines optischen Signals an der Längsseite einer Glasfaser (40), mit folgenden Verfahrensschritten:
Biegen der Glasfaser (40) an einer vorbestimmten Stelle unter einem einstellbaren Winkel (α),
Halten der Glasfaser im gebogenen Zustand; und
Anlegen wenigstens eines Fotodetektors an einen vorbestimmbaren Abschnitt der gebogenen Glasfaser zur Detektion von ausgekoppeltem Licht.

18. Verfahren nach Anspruch 17,
**dadurch gekennzeichnet, dass**
die lichtempfindliche Oberfläche des Fotodetektors mit einstellbarem Druck vorzugsweise tangential an den vorbestimmbaren Abschnitt der gebogenen Glasfaser angelegt wird.

19. Verfahren nach Anspruch 17 oder 18,
**dadurch gekennzeichnet, dass**
der wenigstens eine Fotodetektors unmittelbar an einen vorbestimmbaren Abschnitt der gebogenen Glasfaser zur Detektion von ausgekoppeltem Licht angelegt wird.

## Claims

1. Arrangement for detecting an optical signal on the long side of a glass fibre (40), with
a means (10) for bending the glass fibre (40);
a first holding means (20, 30) for holding the glass fibre (40) in the bent state;
a second holding means (60) for holding at least one photodetector (70),
the bending means (10) and the second holding means (60) being movable in relation to each other such that, when in operation, the photodetector (70) is in contact with a predeterminable portion of the bent glass fibre (40),
**characterized by**
a driving means (80) for bringing the photodetector (70) up to and into contact with a predeterminable portion of the bent glass fibre (40).

2. Arrangement according to claim 1,
**characterized in that**
when in operation, the photodetector (70) is in direct contact with a predeterminable portion of the bent glass fibre (40).

3. Arrangement according to claim 2,
**characterized in that**
when in operation, the light-sensitive surface (75) of the photodetector (70) is at least partially in substantially tangential contact with the predeterminable portion of the bent glass fibre (40).

4. Arrangement according to claim 1,
**characterized in that**
the light-sensitive surface (75) of the photodetector is provided with a light-permeable protective layer (100), an optical lens, particularly a GRIN lens, and/or an optical filter.

5. Arrangement according to claim 4,
**characterized in that**
the light-permeable protective layer (100), the optical lens and/or the optical filter are provided with a curved guide groove (105) for guiding a bent glass fibre portion.

6. Arrangement according to any one of claims 1 to 5,
**characterized in that**
the bending means (10) is an exchangeable rod of round cross-section and predetermined diameter.

7. Arrangement according to claim 6,
**characterized in that**
a protective layer surrounds the rod (10).

8. Arrangement according to claim 6 or 7,
**characterized in that**
a guide groove is provided in the rod (10) for guiding the glass fibre (40) which is to be bent.

9. Arrangement according to any one of claims 1 to 8,
**characterized in that**
the first holding means (20, 30) comprises two holding elements spaced from each other.

10. Arrangement according to claim 9,
**characterized in that**
the holding elements (20, 30) are movable with reference to the bending means and/or in relation to each other.

11. Arrangement according to claim 9 or 10,
**characterized in that**
each holding element (20, 30) comprises a pair of jaws (22, 24; 32, 34) for holding a glass fibre portion.

12. Arrangement according to any one of claims 1 to 11,
**characterized by**
two photodetectors, said photodetectors being movable in relation to each other.

13. Arrangement according to any one of claims 1 to 12,
**characterized in that**
the photodetector (70) is connected to an HF amplifier (110), and **in that**
the photodetector (70) and the HF amplifier (110) are producible in integrated form.

14. Arrangement according to any one of claims 1 to 13,
**characterized in that**
the photodetector (70) is a photodiode.

15. Arrangement according to any one of claims 1 to 14,
**characterized in that**
the driving means (80) is associated with a pressure regulator (90) for bringing the photodetector (70) into contact with the predetermined portion of the glass fibre (40) under an adjustable pressure.

16. Arrangement according to claim 15,
**characterized by**
a control means (150), said control means (150) controlling the driving means (80) as a function of the luminous power detected by the photodetector (70) in such a manner that the photodetector (70) can automatically be brought into contact with that glass fibre portion from which the highest luminous power is issuing.

17. Method for detecting an optical signal on the long side of a glass fibre (40), with the following method steps:
bending of the glass fibre (40) at a predetermined point at an adjustable angle (α);
holding of the glass fibre in the bent state; and
bringing of at least one photodetector into contact with a predeterminable portion of the bent glass fibre for the detection of outcoupled light.

18. Method according to claim 17,
**characterized in that**
the light-sensitive surface of the photodetector is brought into contact under adjustable pressure preferably tangentially with the predeterminable portion of the bent glass fibre.

19. Method according to claim 17 or 18,
**characterized in that**
the at least one photodetector is brought into direct contact with a predeterminable portion of the bent glass fibre for the detection of outcoupled light.

## Revendications

1. Dispositif de détection d'un signal optique sur le côté longitudinal d'une fibre de verre (40), comprenant un dispositif (10) destiné à cintrer la fibre de verre (40),
un premier mécanisme de serrage (20, 30) destiné à maintenir la fibre de verre dans son état cintré,
un second mécanisme de serrage (60) destiné à fixer au moins un photodétecteur (70),
le dispositif de cintrage (10) et le second mécanisme de serrage (60) étant mobiles l'un vis à vis de l'autre de telle sorte qu'à l'état de fonctionnement, le photodétecteur (70) se trouve en face d'un segment prédéterminable de la fibre de verre cintrée (40),
**caractérisé par**
un mécanisme d'entraînement (80) destiné à approcher le photodétecteur (70) et à le disposer en face d'un segment prédéterminable de la fibre de verre cintrée (40).

2. Dispositif selon la revendication 1,
**caractérisé en ce que**
à l'état de fonctionnement, le photodétecteur (70) se trouve directement en face d'un segment prédéterminable de la fibre optique (40) cintrée.

3. Dispositif selon la revendication 2,
**caractérisé en ce que**
à l'état de fonctionnement, la surface photosensible (75) du photodétecteur (70) s'appuie, au moins en partie, sensiblement tangentiellement au segment prédéterminable de la fibre optique (40) cintrée

4. Dispositif selon la revendication 1,
**caractérisé en ce que**
une couche de protection translucide (100), une lentille optique, notamment une lentille GRIN et/ou un filtre optique sont appliqués sur la surface photosensible (75) du photodétecteur (70).

5. Dispositif selon la revendication 4,
**caractérisé en ce que**
la couche de protection translucide (100), la lentille optique et/ou le filtre optique sont pourvus d'une rainure de guidage courbée (105) destinée à guider un segment de fibre optique cintré.

6. Dispositif selon l'une des revendications 1 à 5,
**caractérisé en ce que**
le dispositif de cintrage (10) est une baguette permutable ayant une section transversale ronde et un diamètre prédéterminé.

7. Dispositif selon la revendication 6,
**caractérisé en ce que**
la baguette (10) est entourée d'une couche de protection.

8. Dispositif selon la revendication 6 ou 7,
**caractérisé en ce que**
la baguette (10) est pourvue d'une rainure de guidage destinée à guider la fibre optique (40) à cintrer.

9. Dispositif selon l'une des revendications 1 à 8,
**caractérisé en ce que**
le premier mécanisme de serrage (20, 30) comporte deux éléments de serrage disposés à un certain intervalle l'un de l'autre.

10. Dispositif selon la revendication 9,
**caractérisé en ce que**
les éléments de serrage (20, 30) sont mobiles par rapport au dispositif de cintrage et/ou l'un par rapport à l'autre.

11. Dispositif selon la revendication 9 ou 10,
**caractérisé en ce que**
chaque élément de serrage (20, 30) comprend une paire de mors (22, 24 ; 32, 34) destinées à serrer un segment de fibre optique.

12. Dispositif selon l'une des revendications 1 à 11,
**caractérisé par**
deux photodétecteurs sont mobiles l'un par rapport à l'autre.

13. Dispositif selon l'une des revendications 1 à 12,
**caractérisé en ce que**
le photodétecteur (70) est relié à un amplificateur HF (110), et le photodétecteur (70) et l'amplificateur HF (110) peuvent être fabriqués de manière intégrée.

14. Dispositif selon l'une des revendications 1 à 13,
**caractérisé en ce que**
le photodétecteur (70) est une photodiode.

15. Dispositif selon l'une des revendications 1 à 14,
**caractérisé en ce que**
au mécanisme d'entraînement (80) est assigné un régulateur de pression (90) destiné à appuyer le photodétecteur (70) contre le segment prédéterminé de la fibre de verre (40) à une pression réglable.

16. Dispositif selon la revendication 15,
**caractérisé par**
un organe de réglage (150), qui commande le mécanisme d'entraînement (80) en fonction du rendement lumineux détecté par le photodétecteur (70) de telle sorte que le photodétecteur (70) peut être automatiquement appuyé au segment de fibre optique ayant le rendement lumineux le plus élevé.

17. Procédé de détection d'un signal optique sur le côté longitudinal d'une fibre optique (40) comportant les étapes suivantes :
- cintrage de la fibre optique (40) à un endroit prédéterminé et à un angle réglable (α),
- serrage de la fibre optique à l'état cintré, et
- appui d'au moins un photodétecteur sur un segment prédéterminable de la fibre de verre cintrée pour détecter la lumière extraite.

18. Procédé selon la revendication 17,
**caractérisé en ce que**
la surface photosensible du photodétecteur est appuyée en exerçant une pression réglable, de préférence tangentiellement, au segment prédéterminable de la fibre optique cintrée.

19. Procédé selon la revendication 17 ou 18,
**caractérisé en ce que**
le ou les photodétecteur(s) est/sont appuyé(s) directement à un segment prédéterminable de la fibre optique cintrée pour détecter la lumière extraite.
